# EUROPÄISCHE PATENTANMELDUNG

(11) **EP 0 931 632 A1**
(43) Veröffentlichungstag der Anmeldung: **28.07.1999**
(21) Anmeldenummer: 98810041.8
(22) Anmeldetag: 26.01.1998
(51) Int. Cl.: B27B 21/04, B23D 51/02

(54) **Schneidvorrichtung zum Schneiden von Wärmedämmplatten**

(71) Anmelder: Kambo AG, 7000 Chur (CH)
(72) Erfinder: Schwarz, Bernhard, 7000 Chur (CH)
(74) Vertreter: Riederer, Conrad A., Dr.

(57) **Zusammenfassung**

Wärmedämmplatten (33) aus verschiedensten Materialien sind mit einem sehr einfachen Schneidgerät (11') zu schneiden, bestehend aus einer Säge (69) oder einem Sägemesser und einer Führungseinrichtung, welche zwei Führungsspalte (34,34') zwischen je zwei Stäben (13',14';15',16') aufweist. Die Dicke der Schneide (67) der Säge (69) und die Breite des Führungsspalts (34,34') sind aufeinander abgestimmt und die Sägezähne an der Schneide (67) überstehen die Schneide (67) seitlich nicht. Die beiden Stabpaare (13'/14' und 15'/16') sind über Armpaare (17/18,19/20) zu einem Hebelparallelogramm verbunden, so dass eine Wärmedämmplatte zwischen dem einen Stabpaar (15'/16') und der Auflage (47) eingeklemmt werden kann. Das Hebelparallelogramm ist für Gehrungsschnitte um die Achse (45) verschwenkbar. Die Stäbe (13',14',15',16') sind dreikantig geformt, so dass die eingeklemmte Wärmedämmmplatte (33) auch bei Gehrungsschnitten in Schnittnähe gepresst ist.

## Beschreibung

Die vorliegende Erfindung betrifft eine Schneidvorrichtung zum Schneiden von Wärmedämmplatten, mit einem Sägemesser oder einer Säge und einer Führungseinrichtung.

Zum Schneiden von Wärmedämmplatten werden je nach zu schneidendem Material unterschiedliche Schneidgeräte verwendet. Jedes dieser Schneidgeräte bedeutet eine teure Anschaffung für den unter wirtschaftlichem Druck stehenden Unternehmer. Es besteht deshalb ein Bedürfnis, nach einem einfachen, kostengünstigen und vielseitig verwendbaren Gerät.

Es ist deshalb Aufgabe der Erfindung eine einfache, stabile und kostengünstige Vorrichtung zu schaffen, mit deren Hilfe Wärmedämmplatten verschiedenster Materialien, insbesondere Mineralfaserplatten, Polystyrol- und Polyurethan-Schaumplatten, Korkplatten, Schaumglasplatten und auch zwei- oder mehrschichtige Platten aus einer Wärmedämmschicht und einer harten zweiten Schicht aus beispielsweise Gips, auf der Baustelle exakt geschnitten werden können.

Erfindungsgemäss wird dies dadurch erreicht, dass die Sägezähne des Sägemessers oder der Säge höchstens eine Schnittbreite aufweisen, welche der Dicke der übrigen Schneide entspricht, und dass die Führungseinrichtung einen der Dicke der Schneide entsprechend weiten Führungsspalt zum Führen der Schneide beim Schneiden der Wärmedämmplatten aufweist. Durch Verwendung einer Säge oder eines Sägemessers, deren Zähne höchstens eine Schnittbreite aufweisen, welche der Dicke der übrigen Schneide, d.h. deren Zähne das übrige Sägeblatt oder die übrige Messerklinge seitlich nicht überstehen, kann die Schneide in einem Führungsspalt geführt werden. Die Führung führt die Schneide und die Sägezähne gleiten ohne Widerstand zwischen den beiden Führungsflächen durch den Führungsspalt. Die Säge, z.B. ein Fuchsschwanz, oder das Messer wird quer zu der Führung hin und herbewegt und dabei entlang des Führungsspaltes durch die Wärmedämmplatte geleitet. Die Sägezähne, ob geschränkt oder nicht, liegen innerhalb der Weite des Führungsspaltes und der Dicke der Schneide. Die Sägezähne können daher die Führung nicht beschädigen oder an ihr einhängen.

Ein grundsätzlicher Vorteil einer solchen Schneidvorrichtung ist, dass je nach zu schneidendem Material verschiedene Messer und Sägen eingesetzt werden können. Die Führungseinrichtung bleibt dabei die gleiche.

Vorteilhaft weist die Führungseinrichtung eine Auflage für eine Wärmedämmplatte, wenigstens ein Anschlaglineal zum Anlegen der Wärmedämmplatte und zwei zueinander parallele Führungen auf. Die beiden Führungen sind vorteilhaft über zwei schwenkbare Arme oder Armpaare zu einem Hebelparallelogramm verbunden sind, so dass mit einer der Führungen eine Wärmedämmplatte gegen die Auflage gepresst werden kann und die Schneide in die beiden Führungsspalte eingeführt und mit der Schneide die Wärmedämmplatte entlang der Führungen geschnitten werden kann.

Zwischen Auflage und einer Führung kann durch verschwenken der Arme oder Armpaare eine Wärmedämmplatte eingeklemmt werden. Dabei erfolgt die Pressung genau an der Schnittstelle, was eine präzise Schnittführung gewährleistet. Die Schneide ist hinter und vor der Platte durch eine Führung geführt, daher ist ein Verziehen des Schnittes nicht möglich.

Dank des Anschlaglineals können Wärmedämmplatten winkelgenau geschnitten werden. Vorteilhaft ist der Anschlaglineal im Winkel verstellbar. Vorteilhaft ist wenigstens eine Einrichtung zum Aufstellen der Führungseinrichtung, z.B. ein Standbein, eine Wandstütze und/oder eine Gerüstklemme an der Führungseinrichtung angeordnet.

Zweckmässigerweise sind die Führungen mit je zwei Stäben, vorzugsweise Hohlprofilen, gebildet, welche jeweils mit einem den Führungsspalt bildenden Abstand zueinander angeordnet sind. Eine solche Konstruktion ist kostengünstig und zudem ist die Spaltbreite vorteilhaft durch das Anordnen unterschiedlich dicker Zwischenlagen wählbar.

Vorteilhaft bildet bei einer einfachen Ausführung der Führungseinrichtung die eine Führung zusammen mit einem am Anschlaglineal angeordneten Auflageschenkel die Auflage für eine Wärmedämmplatte. Dank des Auflageschenkels am Anschlaglineal kann auf ein Auflagebrett verzichtet werden, da eine auf den Auflageschenkel und die eine Führung aufgelegte Wärmedämmplatte in zwei einander kreuzenden Richtungen unterstützt ist und daher in der gewünschten Position aufgelegt werden kann.

Um den Herstellungsaufwand der Führungseinrichtung gering zu halten ist das Standbein vorteilhaft durch einen Stab der einen Führung gebildet, welcher länger als die Stäbe der anderen Führung ausgebildet ist.

In einer vorteilhaften Ausführungsform sind das Hebelparallelogramm und die Auflage gegeneinander schwenkbar und in verschwenkter Lage feststellbar, damit auch Gehrungsschnitte ausgeführt werden können. Dazu ist das Hebelparallelogramm zweckmässigerweise an einem Rahmen befestigt und sind am Rahmen auch ein Auflagebrett und das Anschlaglineal angeordnet, wobei vorteilhaft das Hebelparallelogramm verschwenkbar gelagert ist.

Vorteilhaft ist wenigstens einer der die Führung bildenden Stäbe L-förmig oder dreikantig und derart angeordnet, dass der auf der Plattenseite am Führungsspalt angeordnete Winkel zwischen den Kanten desjenigen Stabes, welcher bei verschwenktem Hebelparallelogramm der Auflage näher ist, spitz, vorzugsweise höchstens 45° Grad ist. Dadurch wird die Wärmedämmplatte beim Anpressen mit der Führung auch bei Gehrungsschnitten bis zum entsprechenden Winkel des Stabes immer in Schnittnähe angepresst. Der Querschnitt eines solchen Stabes kann jedoch bei der anpressenden Kante auch eine gewisse Breite oder Rundung aufweisen. Auch im von der zu schneidenden Platte abgewandten Bereich des Stabes sind verschiedenste Profilierungen möglich.

Vorteilhaft liegt die Schwenkachse zum Verschwenken des Hebelparallelogramms in der Ebene der Auflage und in der Schnittebene, so dass das Mass einer zu schneidenden Wärmedämmplatte immer von der gleichen Stelle auf der Auflage aus abgemessen werden kann. Dies bedeutet, dass ein Massstab fest auf der Auflage oder dem Anschlaglineal angebracht sein kann, welcher die Distanz zur Schnittebene angibt.

Vorteilhaft ist auf eine der Führungen ein Gleiter aufsetzbar, welcher die beiden Stäbe zusammenhält und so verhindert, dass der Führungsspalt während des Schneidens aufgeweitet wird. Ein solcher Gleiter weist vorteilhaft ein Einrichtung auf, um eine Messerklinge einzuspannen. Mit einer im Gleiter eingespannten Klinge können Wärmedämmplatten geritzt oder geschnitten werden. Die Klinge ist in der Schneidebene mit Vorteil in einem stumpfen Winkel zur Schnittrichtung angeordnet.

Vorteilhaft ist die Oberfläche der Auflage rauh. Dadurch kann eine Verschiebung der Wärmedämmplatte beim schiefwinkligen Anpressen der Platte für einen Gehrungsschnitt vermieden werden.

Nachfolgend werden Ausführungsbeispiele der Erfindung unter Bezugnahme auf die Figuren beschrieben. Es zeigt
- Fig. 1: eine Vorderansicht eines sehr einfachen Ausführungsbeispiels ohne Auflagebrett und ohne die Möglichkeit von Gehrungsschnitten,
- Fig. 2: eine Seitenansicht des Ausführungsbeispiels gemäss Figur 1,
- Fig. 3: eine perspektivische Skizze eines etwas aufwendigeren Ausführungsbeispiels mit der Möglichkeit zu Gehrungsschnitten und einem Auflagebrett,
- Fig. 4: eine Seitenansicht des Ausführungsbeispiels gemäss Figur 3,
- Fig. 5: eine Untersicht des Ausführungsbeispiels gemäss Figur 3,
- Fig. 6: einen Schemaschnitt durch die Führungen des Ausführungsbeispiels gemäss Figur 3,
- Fig. 7: eine Ansicht eines auf eine Führung mit 30° Profilen aufgesetzten Gleiters mit einer Einrichtung zum Einspannen eines Messers,
- Fig. 8: eine Seitenansicht des Gleiters gemäss Figur 7.

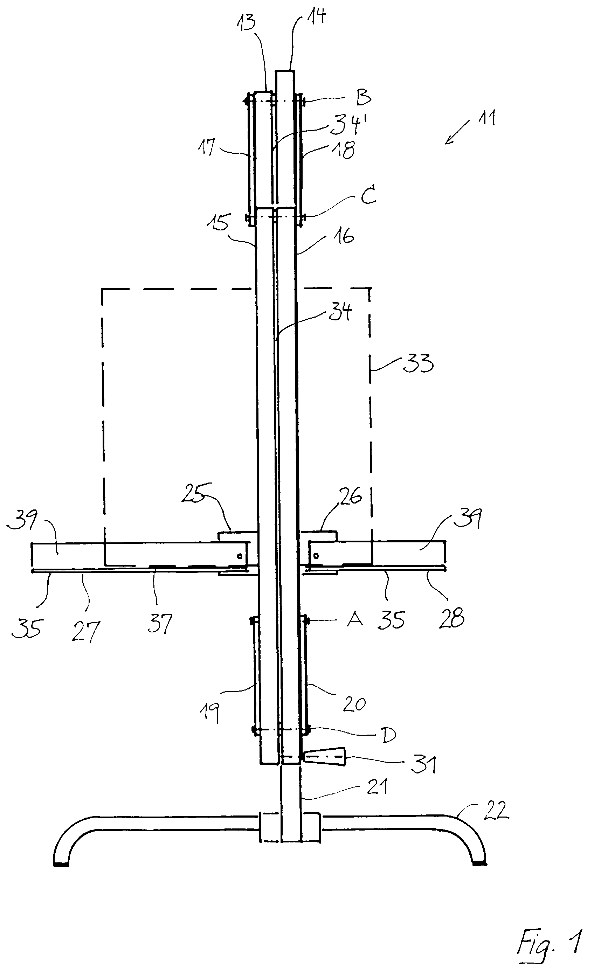

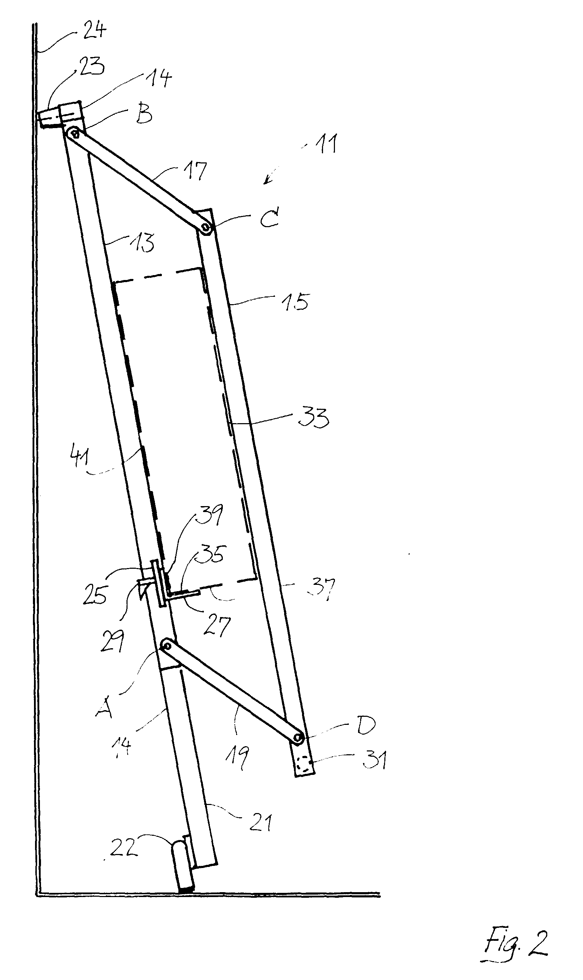

Die Führungseinrichtung 11 gemäss Figur 1 und 2 ist ein sehr einfaches Standmodell. Die Führung für die Schneide einer Säge oder eines Messers besteht aus den zwei Profilpaaren 13/14 und 15/16 mit Vierkantprofilen. Diese Profilpaare sind mit einer Zwischenlage, z.B. einer Unterlagsscheibe zwischen den beiden Profilen 13 und 14, bzw. 15 und 16 zusammengefügt, so dass der Zwischenraum zwischen den Profilen 13,14 bzw. 15,16 etwas breiter ist als die dazwischen zu führende Schneide. Die beiden Profilpaare sind mittels zwei Armpaaren 17,18 bzw. 19/20 zu einem Hebelparallelogramm zusammengefügt, welches an den Verbindungsstellen A,B,C,D mit je einer Achse gelenkig verbunden ist.

Das Profil 14 ist länger als die andern. Es dient mit dem nach unten überstehenden Teil als Standbein 21, an welchem ein horizontal ausgerichteter, breiter Fuss 22 angeschraubt ist. Am oben überstehenden Teil ist nach hinten ein Distanzteil 23 angeordnet, mit welchem die Führungseinrichtung an eine Wand 24 gelehnt werden kann.

Seitlich an den beiden Profilen 13 und 14 ist je ein Blech 25,26 angeschweisst, an welchen Anschlaglineale 27,28 befestigt sind. Die Anschlaglineale 27,28 sind verschwenkbar und in jeder Stellung mit Flügelmuttern 29 am Blech 25,26 feststellbar. Ein Zapfen 31 nahe der Verbindungsstelle D dient dazu, das Hebelparallelogramm zusammen- und aufzuklappen.

Um eine Wärmedämmplatte 33 (gestrichelt dargestellt) zu schneiden, wird diese an die Anschlaglineale 27,28 und auf die Profile 13 und 14 gelegt. Damit die Platte 33 guten Halt findet, sind die Anschlaglineale 27,28 als Winkel ausgebildet, welcher eine Kante der Platte 33 auf zwei seiten umfassen kann. Der Anschlagschenkel 35 liegt an der Seitenfläche 37 der Platte 33 und der Auflageschenkel 39 an der rückseitigen Fläche 41 der Platte 33 an. Der Auflageschenkel 39 liegt in der gleichen Ebene wie die Auflagefläche der Führungsstäbe 13 und 14. Um dies zu erreichen sind die Bleche 25,26 gegenüber dieser Auflagefläche um die Dicke des Auflageschenkels 39 zurückversetzt.

Um mit dieser Führungseinrichtung ein Messer oder eine Säge beim Schneiden der Platte 33 so zu führen, dass die Platte 33 exakt geschnitten wird, muss folgendermassen vorgegangen werden. Zuerst wird der Anschlaglineal 27 und allenfalls auch der Anschlaglineal 28 im gewünschten Winkel festgestellt. Dann wird die Platte 33 auf die Stäbe 13 und 14 und die Auflageschenkel 39 der Anschlaglineale 27 und allenfalls 28 gelegt. Die untere Seitenfläche 37 der Wärmedämmplatte 33 ist in Anschlag mit dem Anschlagschenkel 35 zu bringen. Nun wird am Zapfen 31 das Hebelparallelogramm aus den Führungsstabpaaren 13,14 und 15,16 sowie den Armpaaren 17,18 und 19,20 zusammengeklappt. Die vordere Führung aus den Stäben 15 und 16 liegt sodann auf der einen Fläche der Wärmedämmplatte 33 auf und mit dieser Führung kann nun die Wärmedämmplatte 33 gegen die hintere Führung aus den Stäbe 13 und 14 gedrückt werden. Dabei wird die Platte 33 gepresst, und zwar beidseitig der Schneidlinie. Eine Schneide eines Messers oder einer Säge kann nun in die Führungsspalten 34,34' der vorderen und der hinteren Führung eingeführt werden und mit Sägebewegungen durch die Platte bewegt werden. Dabei ist die Schneide im Führungsspalt 34 durch die Stäbe 13,14 und im Führungsspalt 34' durch die Stäbe 15,16 geführt. Sie kann weder hinter noch vor der Platte 33 von der idealen Schneidlinie abweichen. Daher wird so die Platte 33 exakt geschnitten.

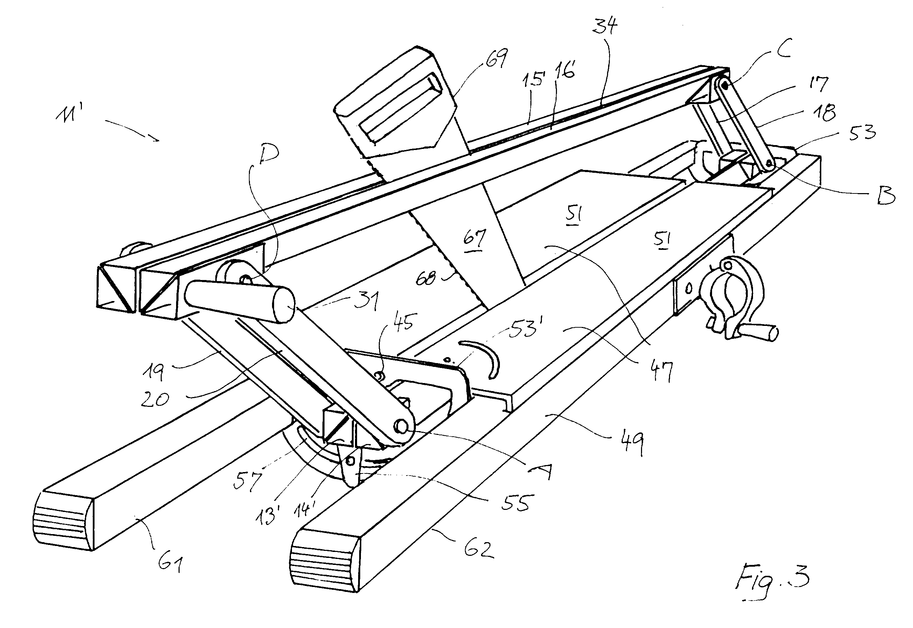

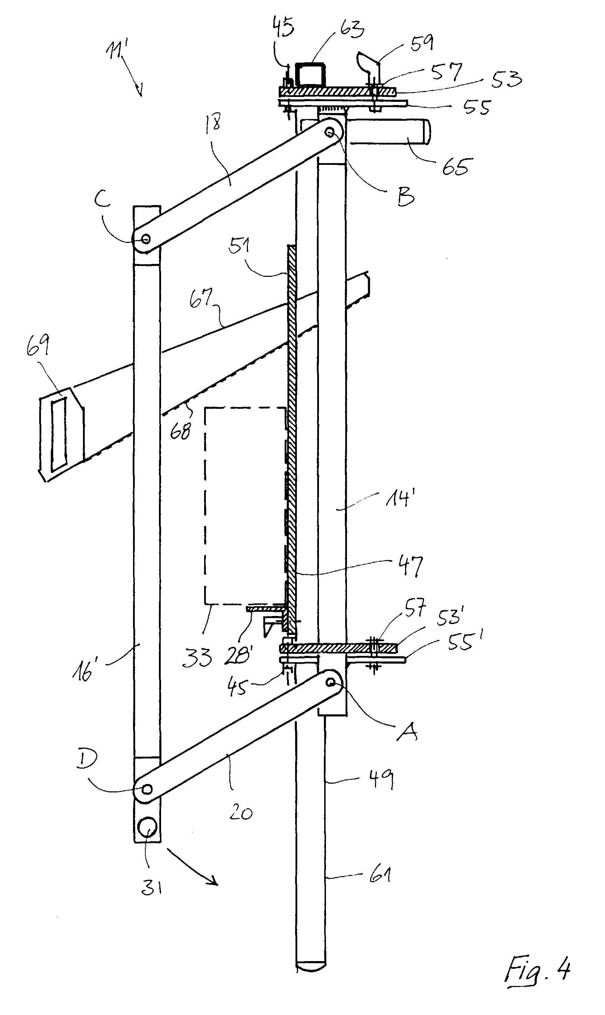

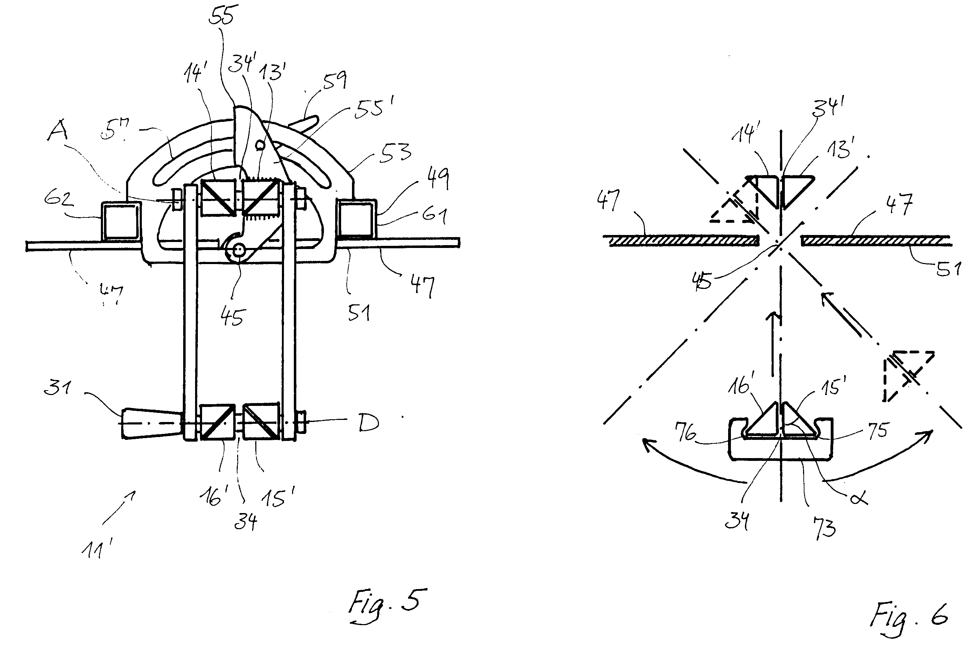

Die Figuren 3 bis 8 beziehen sich auf eine etwas aufwendigere Ausführungsform 11' einer Führungseinrichtung, welche die Möglichkeit aufweist, Gehrungsschnitte auszuführen. Teile, welche den im einfacheren Ausführungsbeispiel gemäss Figuren 1 und 2 entsprechen, sind mit den selben Bezugsziffern versehen.

Das Hebelparallelogramm besteht auch aus den Stabpaaren 13'/14' und 15'/16' und den Armpaaren 17/18 und 19/20 und ist in den Eckpunkten A,B,C,D mit Achsen gelenkig verbunden. An einem Zapfen 31 kann das Hebelparallelogramm verschwenkt werden, wobei sich der Abstand zwischen der vorderen Führung aus dem Stabpaar 15'/16' und der hinteren Führung aus dem Stabpaar 13'/14' verändert. Die Führungsstäbe sind im Querschnitt rechtwinklig-gleichschenklige Dreiecke, deren rechter Winkel jeweils dem zweiten Stab eines Paares zugewandt und von der zu schneidenden Platte weggerichtet ist. Daher wird die Platte 33 beim Anpressen der vorderen Führung für einen rechtwinkligen Schnitt durch die Platte 33 durch zwei spitze Winkel α der Führungsstäbe 15' und 16' gegen die Auflage gepresst.

Die Führungseinrichtung weist aber die Möglichkeit für Gehrungsschnitte auf. Dazu ist das Hebelparallelogramm um eine Achse 45 gegenüber einem ein Auflagebrett 47 aufweisenden Rahmen 49 verschwenkbar. Die Achse 45 liegt in der Ebene der Auflageseite 51 des Auflagebrettes 47. Sie liegt auch in der Schnittebene durch die beiden Führungsspalte 34,34'. Die Achse 47 ist an dieser Stelle auf zwei senkrecht zu diesen Ebenen ausgerichteten Gehrungsblechen 53,53' ausgebildet. Die Gehrungsbleche 53,53' sind mit dem Rahmen 49 fest verbunden. Bei beiden Gehrungsblechen 53,53' ist jeweils ein um die Achse 47 verschwenkbares Zeigerblech 55,55 angeordnet, an welchem die hintere Führung, insbesondere der Stab 13' angeschweisst ist.

Im Gehrungsblech 53,53' ist ein viertelkreisförmig um die Achse 47 angeordneter Schlitz 57 vorgesehen. Eine Feststellschraube 59 ist am Zeigerblech 55 angeordnet und durch diesen Schlitz 57 geführt, so dass mit der Feststellschraube 59 das Zeigerblech 55 gegenüber dem Gehrungsblech 53 festgestellt werden kann. Dadurch ist das Hebelparallelogramm gegenüber dem Rahmen 49 und dem am Rahmen angeordneten Auflageblech 47 feststellbar.

Der Rahmen 49 weist zwei Stäbe 61,62 auf, welche mit den Gehrungsblechen 53,53' und einem Querstab 63 verbunden sind. Die beiden Stäbe 61,62 sind als Beine so weit unter die Verbindungsstelle A des Hebelparallelogrammes geführt, dass die Verbindungsstelle D bei gänzlich zusammengeklapptem Hebelparallelogramm zwischen die beiden Stäbe 61,62 zu liegen kommt. Dadurch kann, wenn die Führungseinrichtung mit diesem Rahmen 49 auf den Boden gestellt ist, das Hebelparallelogramm den Boden nicht berühren. Am Rahmen 49 ist zudem eine ausschwenkbare Wandabstützung 65 angelenkt, damit beim Sägen der Platte 33 hinter der hinteren Führung aus den Stäben 13' und 14' genügend Raum ist für die Sägebewegung.

Am Auflagebrett 47, welches zweigeteilt ist, sind die Anschlaglineale 27',28' angelenkt. Diese sind im Winkel verstellbar und feststellbar. Das Auflagebrett 47 weist eine aufgerauhte Oberfläche 51 auf. Dadurch verrutschen aufgelegte Wärmedämmplatten weniger. Dies ist dann von Bedeutung, wenn die Platte 33 für einen Gehrungsschnitt nicht in senkrechter Richtung gepresst wird.

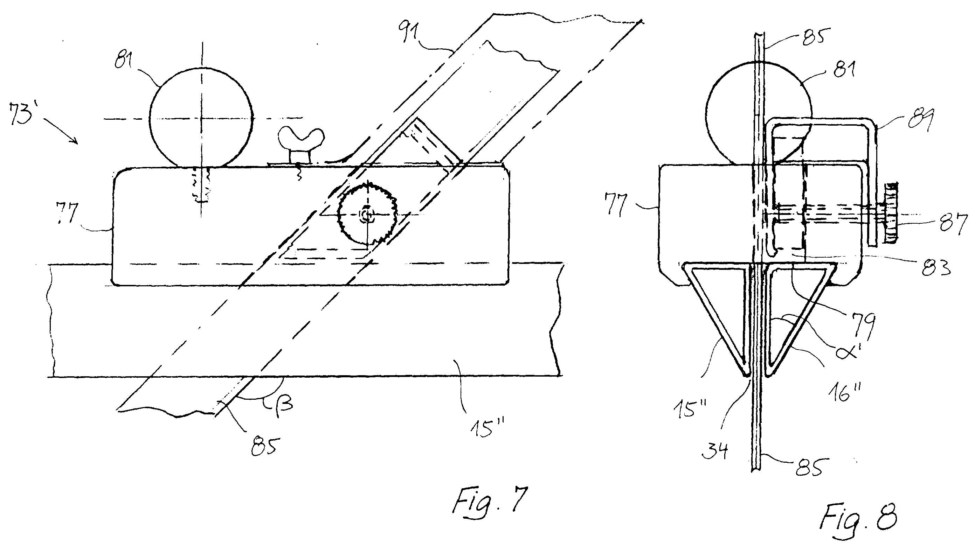

Beim Schneiden einer Platte 33 wird diese wie beim einfacheren Ausführungsbeispiel 11 mit der vorderen Führung gegen die Auflage gepresst, um dann mit der Schneide 67 einer Säge 69 oder eines Messers durch die Führungsspalten 34,34' geführt durch die Platte zu schneiden. Solange die Schnittebene senkrecht zur Plattenoberfläche bzw. Auflagefläche 51 verläuft, wird die Platte 33 durch die Führungsstäbe 15' und 16' senkrecht gepresst. Bei einem Gehrungssschnitt jedoch ist das Hebelparallelogramm um die Achse 45 verschwenkt. Aus der Figur 6 ist eine Verschwenkung um 45 Grad (gestrichelt eingezeichnete Führungen) ersichtlich. Damit die Platte auch bei Gehrungsschnitten in Schnittnähe mit der vorderen Führung gegen die Auflage gepresst werden kann, sind die Stäbe 15',16' der vorderen Führung dreikantig. Bei einem Gehrungsschnitt von 45 Grad liegt die Hypotenuse des rechtwinklig-gleichschenkligen Querschnittes des einen Stabes (in Figur 6 Stab 15') auf der Wärmedämmplatte auf. Mit spitzeren Winkeln α an den Stäben können auch spitzere Gehrungsschnitte ausgeführt werden, bis eine ganze Fläche des Stabes aufliegt. Bei noch spitzeren Schnittwinkeln erfolgt die Anpressung nicht wie erwünscht in Schnittnähe. Beim Anpressen der Platte mit der vorderen Führung wirkt diese in Richtung des Pfeils 71 auf die Platte, wobei die Komponente vertikal zur Auflagefläche 51 die Platte anpresst, die Komponente parallel zur Auflagefläche 51 die Platte jedoch verschieben möchte. Deshalb ist die Oberfläche 51 des Auflagebrettes 47 rauh und die Oberfläche des Stabes 15',16' glatt. Die hintere Führung aus den Stäben 13' und 14' ist hinter dem Auflagebrett 47 angeordnet. Damit sie bei einer Verschwenkung des Hebelparallelogrammes nicht in Konflikt mit dem Auflagebrett 47 kommt, sind die Stäbe 13' und 14' auch dreikantig ausgebildet.

Die Fuchsschwanzsäge 69 oder das Messer zum Schneiden in der Führung, kann Zähne 68 an der Schneide 67 aufweisen. Diese sind an der Schneide 67 zwischen den Führungsstäben 13'/14',15'/16' geführt. Ein Konflikt zwischen den Zähnen 68 und der Führung entsteht nicht, da die Zähne 68 lediglich innerhalb der Dicke der Schneide 67 angeordnet sind.

In Figur 6 ist auf den Stäben 15' und 16' ist ein Gleiter 73 angeordnet. Dieser umfasst die zwei gegenüberliegenden Aussenkanten 75,76 der vorderen Führung, damit der Führungsspalt 34 sich nicht aufweiten kann. Ein dem Gleiter 73 in Figur 6 ähnlicher Gleiter 73' ist in den Figuren 7 und 8 dargestellt. Dieser Gleiter 73' sitzt auf einer Führung aus zwei Dreikantstäben 15'' und 16''. Diese Dreikantstäbe 15'',16'' weisen einen dem Schneidgut zugewandten Winkel α' von 30 Grad auf. Dadurch wird mit einen Stab (15''oder 16'', je nach Winkeleinstellung), bis zu einem Winkel von 60 Grad gegenüber der Senkrechten zum Schneidgut, dieses in Schnittnähe angepresst. Der Gleiter 73' besteht aus einem Gleitkörper 77 mit einer konischen Vertiefung 79. Mit der Vertiefung 79 sitzt der Gleitkörper 77 rittlings auf den beiden Stäben 15'',16''. Durch Zusammenpressen der Stäbe wird der Abstand der mit der Vertiefung 79 zusammenwirkenden Kanten 75',76' verkleinert, so dass der Gleitkörper 77 aufgesetzt oder entfernt werden kann. Am Gleitkörper 77 ist ein Halteknopf 81 angeordnet, welcher zum Schneiden mit dem Gleiter oder zum Führen des Gleiters mit der Hand erfasst werden kann. Ein Schlitz 83 im Gleitkörper 77 dient zur Durchführung einer Klinge 85 durch den Gleitkörper. Die Klinge 83 kann mit einer Klemmschraube 87 und einem Klemmbügel 89 im Schlitz 83 festgeklemmt werden. Die Klinge kann dadurch in der Länge verstellt werden. Auf den Gleitkörper ist eine Schutzhülle 91 (in Figur 7 gestrichelt eingezeichnet) zum Schutz vor Verletzungen am vorstehenden Messer 85 aufschraubbar. Der Winkel β des Messers bezüglich der Führung bzw. der Schnittrichtung ist 135 Grad.

## Patentansprüche

1. Schneidvorrichtung zum Schneiden von Wärmedämmplatten (33), mit einem Sägemesser oder einer Säge (69) und einer Führungseinrichtung (11,11'), wobei die Sägezähne des Sägemessers oder der Säge (69) höchstens eine Schnittbreite aufweisen, welche der Dicke der übrigen Schneide (67) entspricht, und die Führungseinrichtung (11,11') einen der Dicke der Schneide entsprechend weiten Führungsspalt (34,34') zum Führen der Schneide (67) beim Schneiden der Wärmedämmplatten (33) aufweist.

2. Schneidvorrichtung nach Anspruch 1, dadurch gekennzeichnet, dass die Führungseinrichtung (11,11') eine Auflage (13,14,39;47) für eine Wärmedämmplatte (33), wenigstens ein Anschlaglineal (27,28;27',28') zum Anlegen der Wärmedämmplatte (33) und zwei zueinander parallele Führungen (13/14,15/16;13'/14',15'/16') aufweist, welche über zwei schwenkbare Arme oder Armpaare (17/18,19/20)zu einem Hebelparallelogramm verbunden sind, so dass mit einer der Führungen (15/16;15'/16') eine Wärmedämmplatte (33) gegen die Auflage (13,14,39;47) gepresst werden kann und die Schneide (67) in die beiden Führungsspalte (34,34') eingeführt und mit der Schneide (67) die Wärmedämmplatte (33) entlang der Führungen (13/14,15/16;13'/14',15'/16') geschnitten werden kann.

3. Schneidvorrichtung nach Anspruch 1 oder 2, dadurch gekennzeichnet, dass die Führungen (13/14,15/16;13'/14',15'/16') mit je zwei Stäben, vorzugsweise Hohlprofilen, gebildet sind, welche jeweils mit einem den Führungsspalt (34,34') bildenden Abstand zueinander angeordnet sind.

4. Schneidvorrichtung nach Anspruch 1 bis 3, dadurch gekennzeichnet, dass die eine Führung (13/14,15/16;13'/14',15'/16') zusammen mit einem am Anschlaglineal (27,28) angeordneten Auflageschenkel (39) die Auflage für eine Wärmedämmplatte (33) bildet.

5. Schneidvorrichtung nach einem der Ansprüche 1 bis 4, dadurch gekennzeichnet, dass das Hebelparallelogramm und die Auflage (47) gegeneinander schwenkbar und in verschwenkter Lage feststellbar sind, so dass mit der Schneidvorrichtung (11') Gehrungsschnitte ausgeführt werden können.

6. Schneidvorrichtung nach Anspruch 5, dadurch gekennzeichnet, dass wenigstens einer der die Führung bildenden Stäbe (13',14',15',16') derart geformt und angeordnet ist, dass der auf der Plattenseite am Führungsspalt (34,34') angeordnete Winkel (α,α') desjenigen Stabes, welcher bei verschwenktem Hebelparallelogramm der Auflage (47) näher ist, spitz, vorzugsweise höchstens 45° Grad ist.

7. Schneidvorrichtung nach Anspruch 5 oder 6, dadurch gekennzeichnet, dass die Schwenkachse (45) zum Verschwenken des Hebelparallelogramms in der Ebene der Auflage (47) und in der Schnittebene liegt.

8. Schneidvorrichtung nach einem der Ansprüche 1 bis 7, gekennzeichnet durch einen Gleiter (73,73') zum Aufstecken auf die Stäbe (15,16;15',26') einer der Führungen, um die Stäbe zusammenzuhalten.

9. Schneidvorrichtung nach Anspruch 8, dadurch gekennzeichnet, dass am Gleiter (73') eine Klinge (85) derart befestigbar ist, dass diese Klinge (85) beim Schneiden durch den Führungsspalt (34) geführt ist.

10. Schneidvorrichtung nach einem der Ansprüche 1 bis 9, dadurch gekennzeichnet, dass die Oberfläche (51) der Auflage (47) rauh ist.
